(19) Europäisches Patentamt / European Patent Office / Office européen des brevets

(11) **EP 4 048 470 B1**

(12) **EUROPEAN PATENT SPECIFICATION**

(45) Date of publication and mention of the grant of the patent:
**18.03.2026 Bulletin 2026/12**

(21) Application number: **20807210.8**

(22) Date of filing: **21.10.2020**

(51) International Patent Classification (IPC):
**B23K 9/095** $^{(2006.01)}$

(52) Cooperative Patent Classification (CPC):
**B23K 9/0953; B23K 9/0956**

(86) International application number:
**PCT/US2020/056687**

(87) International publication number:
**WO 2021/081111 (29.04.2021 Gazette 2021/17)**

(54) **WELDING-TYPE SYSTEM, AND METHOD TO DETERMINE A TOTAL HEAT INPUT TO A WELDING-TYPE OPERATION INVOLVING MULTIPLE ENERGY SOURCES**

SCHWEISSSYSTEM UND VERFAHREN ZUR BESTIMMUNG DER GESAMTWÄRMEZUFUHR BEI EINEM SCHWEISSVORGANG MIT MEHREREN ENERGIEQUELLEN

SYSTÈME DE SOUDAGE ET PROCÉDÉ POUR DÉTERMINER L'APPORT THERMIQUE TOTAL D'UNE OPÉRATION DE SOUDAGE IMPLIQUANT PLUSIEURS SOURCES D'ÉNERGIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.10.2019 US 201962924081 P**

(43) Date of publication of application:
**31.08.2022 Bulletin 2022/35**

(73) Proprietor: **Illinois Tool Works, Inc.**
**Glenview, Illinois 60025 (US)**

(72) Inventors:
• **MASSEY, Steven Blair**
**Glenview, Illinois 60025 (US)**
• **UECKER, James Lee**
**Glenview, Illinois 60025 (US)**
• **DAVIDSON, Robert Raimund**
**Glenview, Illinois 60025 (US)**

(74) Representative: **HGF**
**HGF Limited**
**4th Floor, 1 City Square**
**Leeds LS1 2ES (GB)**

(56) References cited:
**US-A1- 2013 119 036    US-A1- 2018 264 578**
**US-A1- 2018 333 798    US-A1- 2019 193 191**

**Description**

This present invention relates generally to welding processes involving preheating wire and, more particularly, to a welding-type system and to a method to determine a total heat input to a welding-type operation, see the preamble of claims 1 and 9 (see for example either US 2013/119036 A1 or US 2018/333798 A1).

Welding is a process that has increasingly become ubiquitous in all industries. Welding is, at its core, simply a way of bonding two pieces of metal. A wide range of welding systems and welding control regimes have been implemented for various purposes. In continuous welding operations, metal inert gas (MIG) welding and submerged arc welding (SAW) techniques allow for formation of a continuing weld bead by feeding welding electrode wire shielded by inert gas from a welding torch and/or by flux. Such wire feeding systems are available for other welding systems, such as tungsten inert gas (TIG) welding. Electrical power is applied to the welding wire and a circuit is completed through the workpiece to sustain a welding arc that melts the electrode wire and the workpiece to form the desired weld.

Prior patent document US2018333798A1 describes an example of a consumable electrode-fed welding-type system. The system comprising a welding-type power source configured to provide welding-type power to a welding-type circuit, the welding-type circuit comprising a welding-type electrode and a first contact tip of a welding torch. The system also comprising an electrode preheating circuit configured to provide preheating power through a first portion of the welding-type electrode via a second contact tip of the welding torch and an electrode preheating control circuit configured to control the preheating power based on a user input specifying the preheating power. Prior patent document US2019193191A1 describes an example of a welding system comprising a welding current source configured to provide welding current to a welding circuit, the welding circuit comprising an electrode wire and a first contact tip of a welding torch. The system also comprises an electrode preheating circuit configured to provide preheating current through a first portion of the electrode wire via a second contact tip of the welding torch and at least one induction heating coil configured to apply induction heat to a workpiece, the welding current source, the electrode preheating circuit, and the induction heating coil configured to perform a preheating operation and a welding operation on the workpiece.

SUMMARY

Methods and apparatus to determine energy input to welding processes involving multiple energy sources are disclosed, substantially as illustrated by and described in connection with at least one of the figures. A welding-type system and a method to determine a total heat input to a welding-type operation according to the present invention are defined respectively in claims 1 and 9

Further preferred embodiments are defined in the dependent claims.

BRIEF DESCRIPTION OF THE DRAWINGS

Figure 1A illustrates an example welding system including a welding power supply configured to convert input power to welding power and preheating power, in accordance with aspects of this disclosure.

Figure 1B illustrates another example welding system including a welding power supply configured to convert input power to welding power and a preheating power supply configured to convert input power to preheating power, in accordance with aspects of this disclosure.

Figure 2 is a block diagram of an example implementation of the power supplies of Figure 1B.

Figure 3 is a flowchart representative of example machine readable instructions which may be executed by the power supply to determine a total power input to a weld by multiple power supplies and/or sources of heat input.

The figures are not necessarily to scale. Where appropriate, similar or identical reference numbers are used to refer to similar or identical components.

DETAILED DESCRIPTION

For the purpose of promoting an understanding of the principles of this present invention, reference will be now made to the examples illustrated in the drawings and specific language will be used to describe the same. It will nevertheless be understood that no limitation of the scope of the claims is intended by this disclosure. Modifications in the illustrated examples and such further applications of the principles of this disclosure as illustrated therein are contemplated as would typically occur to one skilled in the art to which this disclosure relates.

Disclosed example methods and apparatus calculate instantaneous power of a process that contains multiple sources of input energy and display the calculated power via a user interface. Example forms of energy that may be input to a weld process, and which may be calculated, include laser(s), arc(s), resistive preheating of the wire, induction preheating of the wire, and/or other types of preheating and/or other process energy. Example methods and apparatus may display the power or energy information in the form of Watts and/or Joules per second, which may be derived by the calculation of average of instantaneous power.

While conventional systems displayed average instantaneous power from the arc during welding, conventional systems do not take into account energy input to the process via wire preheating. Prior to this disclosure, it was widely believed in the welding field that the total heat input to a welding operation, additive manufacturing operation, and/or other welding-type operation was less than the sum of heat input from multiple heat sources. However, the inventors of the disclosed and/or claimed systems and methods have discovered through calorimetry testing that the preheating energy used to preheat the wire contributes to the energy absorbed into the workpiece or base material, and that the total heat input to the welding operation, additive manufacturing operation, or other welding-type operation can be represented as a sum of the individual heat inputs.

In contrast to conventional energy calculations, disclosed methods and apparatus include additional energy sources in the calculation. Additional forms of energy could be in the form of laser(s), additional arc(s), resistive preheating of the wire, induction preheating of the wire, and/or any other energy sources.

Disclosed example methods and apparatus may be implemented within software of welding power supply, process control systems, and/or as stand-alone devices. Example methods and apparatus calculate and output instantaneous power of a process that contains multiple sources of input energy. Examples of outputting the calculated instantaneous power include displaying the calculated power via a user interface and/or outputting the calculated power to an external device. Example output may be in the form of Watts or Joules/second and is derived by the calculation of average instantaneous power. The displayed information can then be used to understand heat input by multiplying by the weld or process time (e.g., in seconds) and dividing by the weld length to arrive at a heat input value in Joules/unit weld length.

To calculate the average instantaneous power, disclosed example methods and apparatus collect process feedback data from all energy input systems at a processor in communication with the energy input systems. The processor performs the calculation and outputs the result (e.g., displays or communicates the result). An example calculation that may be used by example methods and apparatus is the sum of average instantaneous power from all energy sources. For example, for n total energy sources, the total average instantaneous power may be represented as:

Total Average Instantaneous Power (e.g., J/s or Watts) = (Average Instantaneous Power from Energy Source 1) + (Average Instantaneous Power from Energy Source 2) + . . . (Average Instantaneous Power from Energy Source n)

In addition or as an alternative to total average instantaneous power, example methods and apparatus may calculate and use average power and/or root mean square (RMS) power calculations. For example, average power and/or root mean square (RMS) power may be used in non-waveform-controlled processes instead of total average instantaneous power.

Advantageously, the operator does not need to acquire or operate additional high-speed data acquisition equipment to understand the process heat input. Instead, disclosed examples enable, for example, an energy source (e.g., a welding-type power supply) involved in the system to perform the calculation and output the results.

As utilized herein the terms "circuits" and "circuitry" refer to physical electronic components (i.e. hardware) and any software and/or firmware (code) that may configure the hardware, be executed by the hardware, and/or otherwise be associated with the hardware. As used herein, for example, a particular processor and memory may comprise a first "circuit" when executing a first set of one or more lines of code and may comprise a second "circuit" when executing a second set of one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y." As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms "e.g." and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled (e.g., by an operator-configurable setting, factory trim, etc.).

As used herein, a wire-fed welding-type system refers to a system capable of performing welding (e.g., gas metal arc welding (GMAW), gas tungsten arc welding (GTAW), submerged arc welding (SAW), etc.), brazing, cladding, hardfacing, and/or other processes, in which a filler metal is provided by a wire that is fed to a work location, such as an arc or weld puddle.

As used herein, a welding-type power source refers to any device capable of, when power is applied thereto, supplying welding, cladding, plasma cutting, induction heating, laser (including laser welding, laser cladding, and/or laser additive manufacturing), carbon arc cutting or gouging and/or resistive preheating, including but not limited to transformer-rectifiers, inverters, converters, resonant power supplies, quasi-resonant power supplies, switch-mode power supplies, etc., as well as control circuitry and other ancillary circuitry associated therewith. The terms "power source" and "power supply" are used interchangeably herein.

As used herein, preheating refers to heating the electrode wire prior to a welding arc and/or deposition in the travel path of the electrode wire.

Some disclosed examples describe electric currents being conducted "from" and/or "to" locations in circuits and/or power supplies. Similarly, some disclosed examples describe "providing" electric current via one or more paths, which may include one or more conductive or partially conductive elements. The terms "from," "to," and "providing," as used to describe conduction of electric current, do not necessitate the direction or polarity of the current. Instead, these electric currents may be conducted in either direction or have either polarity for a given circuit, even if an example current polarity or direction is provided or illustrated.

Disclosed example welding-type systems include: a processor and memory comprising machine readable instructions which, when executed, cause the processor to: collect a plurality of average instantaneous power measurements from a plurality of welding-type power sources associated with a single welding-type process; and determine a total power input to the welding-type process by summing the average instantaneous power measurements for each of the welding-type power sources.

Some example welding-type systems include power conversion circuitry configured to output welding-type power, in which the processor is configured to collect at least one of the average instantaneous power measurements from the welding-type power. Some example welding-type systems power conversion circuitry configured to output preheating power to an electrode preheating circuit, in which the processor is configured to collect at least one of the average instantaneous power measurements from the preheating power.

Some example welding-type systems further include a first voltage sensor configured to measure a first voltage output by a first one of the plurality of welding-type power sources, and a first current sensor configured to measure a first current output by the first one of the plurality of welding-type power sources, in which the instructions are configured to cause the processor to determine a first portion of the plurality of average instantaneous power measurements from the first voltage output and the first current output. In some examples, the first voltage sensor is physically attached to or integrated in at least one of a welding torch or the first one of the plurality of welding-type power sources.

Some example welding-type systems further include a second voltage sensor configured to measure a second voltage output by a second one of the plurality of welding-type power sources, and a second current sensor configured to measure a second current output by the second one of the plurality of welding-type power sources, in which the instructions are configured to cause the processor to determine a second portion of the plurality of average instantaneous power measurements from the second voltage output and the second current output. In some examples, the second voltage sensor is physically attached to or integrated in at least one of a welding torch or the second one of the plurality of welding-type power sources.

In some examples, the instructions are configured to cause the processor to determine the total power input as a total average instantaneous power. In some examples, the instructions are configured to cause the processor to display the determined total power via a display. In some examples, the instructions are configured to cause the processor to transmit the determined total power via communications circuitry.

Disclosed example methods to determine a total heat input to a welding-type operation involve: collecting, via a processor, a plurality of average instantaneous power measurements from a plurality of welding-type power sources associated with a single welding-type process; and determining, via the processor, a total power input to the welding-type process by summing the average instantaneous power measurements for each of the welding-type power sources.

Some example methods further involve outputting welding-type power via power conversion circuitry, in which the collecting of the plurality of average instantaneous power measurements involves collecting the at least a portion of the plurality of average instantaneous power measurements from the welding-type power. Some example methods further involve outputting preheating power via power conversion circuitry, in which the collecting of the plurality of average instantaneous power measurements involves collecting the at least a portion of the plurality of average instantaneous power measurements from the preheating power.

Some example methods further involve measuring, via a first voltage sensor, a first voltage output by a first one of the plurality of welding-type power sources, and measuring, via a first current sensor, a first current output by the first one of the plurality of welding-type power sources, in which the determining of the plurality of average instantaneous power measurements involves determining a first portion of the plurality of average instantaneous power measurements from the first voltage output and the first current output. In some example methods, the first voltage sensor is physically attached to or integrated in at least one of a welding torch or the first one of the plurality of welding-type power sources.

Some example methods further involve measuring, via a second voltage sensor, a second voltage output by a second one of the plurality of welding-type power sources, and measuring, via a second current sensor, a second current output by the second one of the plurality of welding-type power sources, in which the determining of the plurality of average instantaneous power measurements involve determining a second portion of the plurality of average instantaneous power measurements from the second voltage output and the second current output. In some example methods, the second voltage sensor is physically attached to or integrated in at least one of a welding torch or the second one of the plurality of welding-type power sources.

In some examples, determining the total power input involves determining a total average instantaneous power. Some example methods further involve displaying the determined total power via a display. Some example methods further involve transmitting the determined total power via communications circuitry.

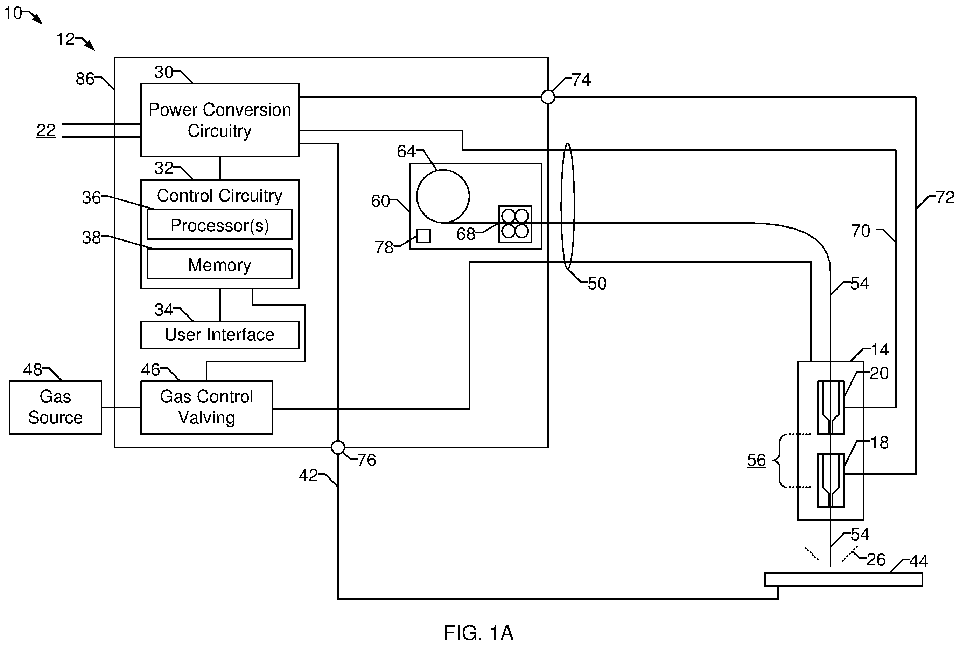

Figure 1A illustrates an example welding system 10, including a welding power supply 12 configured to convert input power to welding power and preheating power. The example welding system 10 of Figure 1A includes the welding power supply 12 and a preheating welding torch 14. The welding torch 14 may be a torch configured for any wire-fed welding process, such as gas metal arc welding (GMAW), flux cored arc welding (FCAW), self-shielded FCAW, and/or submerged arc welding (SAW), based on the desired welding application.

The welding power supply 12 converts the input power from a source of primary power 22 to one or both of output welding power and/or preheating power, which are output to the welding torch 14. In the example of Figure 1A, the welding power source also supplies the filler metal to a welding torch 14 configured for GMAW welding, FCAW welding, or SAW welding.

The welding power supply 12 is coupled to, or includes, the source of primary power 22, such as an electrical grid or engine-driven generator that supplies primary power, which may be single-phase or three-phase AC power. For example, the welding power supply 12 may be an engine-driven welding power source that includes the engine and generator that provides the primary power 22 within the welding power supply 12. The welding power supply 12 may process the primary power 22 to output welding-type power for output to the welding torch 14 via an torch cable 50.

Power conversion circuitry 30 converts the primary power (e.g., AC power) to welding-type power as either direct current (DC) or AC, and to preheating power. Example preheating power may include DC and/or AC electrical current that provides resistive, or Joule, heating when conducted through a portion of the electrode wire 54. Additional examples of preheating power disclosed herein may include high frequency AC current that provides inductive heating within the electrode wire 54, and/or power suitable for hotwire techniques, arc-based preheating in which an electrical arc is used to apply heat to the wire prior to the welding arc, laser-based preheating, radiant heating, convective heating, and/or any other forms of wire heating. The power conversion circuitry 30 may include circuit elements such as transformers, switches, boost converters, inverters, buck converters, half-bridge converters, full-bridge converters, forward converters, flyback converters, an internal bus, bus capacitor, voltage and current sensors, and/or any other topologies and/or circuitry to convert the input power to the welding power and the preheating power, and to output the welding power and the preheating power to the torch 14. Example implementations of the power conversion circuitry 30 are disclosed below in more detail.

The first and second portions of the input power may be divided by time (e.g., the first portion is used at a first time and the second portion is used at a second time) and/or as portions of the total delivered power at a given time. The power conversion circuitry 30 outputs the welding power to a weld circuit, and outputs the preheating power to a preheating circuit or other preheater. The weld circuit and the preheating circuit may be implemented using any combination of the welding torch 14, a weld accessory, and/or the power supply 12.

The power conversion circuitry 30 may include circuit elements such as boost converters. In some examples, the primary power 22 received by the power conversion circuitry 30 is an AC voltage between approximately 110V and 575V, between approximately 110V and 480V, or between approximately 110V and 240V. As used in reference to the input power, the term approximately may mean within 5 volts or within 10 percent of the desired voltage.

The power conversion circuitry 30 may be configured to convert the input power to any conventional and/or future welding-type output. The example power conversion circuitry 30 may implement one or more controlled voltage control loop(s), one or more controlled current control loop(s), one or more controlled power control loops, one or more controlled enthalpy control loops, and/or one or more controlled resistance control loops to control the voltage and/or current output to the welding circuit and/or to the preheating circuit. As described in more detail below, the power conversion circuitry 30 may be implemented using one or more converter circuits, such as multiple converter circuits in which each of the welding-type output and the preheating output is produced using separate ones of the converter circuits.

In some examples, the power conversion circuitry 30 is configured to convert the input power to a controlled waveform welding output, such as a pulsed welding process or a short circuit welding process (e.g., regulated metal deposition (RMD™)). For example, the RMD™ welding process utilizes a controlled waveform welding output having a current waveform that varies at specific points in time over a short circuit cycle.

The welding power supply 12 includes control circuitry 32 and an user interface 34. The control circuitry 32 controls the operations of the welding power supply 12 and may receive input from the user interface 34 through which an operator may choose a welding process (e.g., GMAW, FCAW, SAW) and input desired parameters of the input power (e.g., voltages, currents, particular pulsed or non-pulsed welding regimes, and so forth). The control circuitry 32 may be configured to receive and process a plurality of inputs regarding the performance and demands of the system 10.

The control circuitry 32 includes one or more controller(s) and/or processor(s) 36 that controls the operations of the power supply 12. The control circuitry 32 receives and processes multiple inputs associated with the performance and demands of the system. The processor(s) 36 may include one or more microprocessors, such as one or more "general-purpose" microprocessors, one or more special-purpose microprocessors and/or ASICS, one or more microcontrollers, and/or any other type of processing and/or logic device. For example, the control circuitry 32 may include one or more digital signal processors (DSPs). The control circuitry 32 may include circuitry such as relay circuitry, voltage and current sensing circuitry, power storage circuitry, and/or other circuitry, and is configured to sense the primary power 22 received by the power supply 12.

The example control circuitry 32 includes one or more memory device(s) 38. The memory device(s) 38 may include volatile and/or nonvolatile memory and/or storage devices, such as random access memory (RAM), read only memory (ROM), flash memory, hard drives, solid state storage, and/or any other suitable optical, magnetic, and/or solid-state storage mediums. The memory device(s) 38 store data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth. The memory device 38 may store machine executable instructions (e.g., firmware or software) for execution by the processor(s) 36. Additionally or alternatively, one or more control schemes for various welding processes, along with associated settings and parameters, may be stored in the memory device(s) 38, along with machine executable instructions configured to provide a specific output (e.g., initiate wire feed, enable gas flow, capture welding current data, detect short circuit parameters, determine amount of spatter) during operation.

The example user interface 34 enables control or adjustment of parameters of the welding system 10. The user interface 34 is coupled to the control circuitry 32 for operator selection and adjustment of the welding process (e.g., pulsed, short-circuit, FCAW) through selection of the wire size, wire type, material, and gas parameters. The user interface 34 is coupled to the control circuitry 32 for control of the voltage, amperage, power, enthalpy, resistance, wire feed speed, and arc length for a welding application. The user interface 34 may receive inputs using any input device, such as via a keypad, keyboard, buttons, touch screen, voice activation system, wireless device, etc.

The user interface 34 may receive inputs specifying wire material (e.g., steel, aluminum), wire type (e.g., solid, cored), wire diameter, gas type, and/or any other parameters. Upon receiving the input, the control circuitry 32 determines the welding output for the welding application. For example, the control circuitry 32 may determine weld voltage, weld current, wire feed speed, inductance, weld pulse width, relative pulse amplitude, wave shape, preheating voltage, preheating current, preheating pulse, preheating resistance, preheating energy input, and/or any other welding and/or preheating parameters for a welding process based at least in part on the input received through the user interface 34.

In some examples, the welding power supply 12 may include polarity reversing circuitry. Polarity reversing circuitry reverses the polarity of the output welding-type power when directed by the control circuitry 32. For example, some welding processes, such as TIG welding, may enable a desired weld when the electrode has a negative polarity, known as DC electrode negative (DCEN). Other welding processes, such as stick or GMAW welding, may enable a desired weld when the electrode has a positive polarity, known as DC electrode positive (DCEP). When switching between a TIG welding process and a GMAW welding process, the polarity reversing circuitry may be configured to reverse the polarity from DCEN to DCEP.

Additionally or alternatively, the operator may simply connect the torch 14 to the power supply 12 without knowledge of the polarity, such as when the torch is located a substantial distance from the power supply 12. The control circuitry 32 may direct the polarity reversing circuitry to reverse the polarity in response to signals received through communications circuitry, and/or based on a selected or determined welding process.

In some examples, the power supply 12 includes communications circuitry. For example, communications circuitry may be configured to communicate with the welding torch 14, accessories, and/or other device(s) coupled to power cables and/or a communications port. The communications circuitry sends and receives command and/or feedback signals over welding power cables used to supply the welding-type power. Additionally or alternatively, the communications circuitry may communicate wirelessly with the welding torch 14 and/or other device(s).

For some welding processes (e.g., GMAW), a shielding gas is utilized during welding. In the example of Figure 1A, the welding power supply 12 includes one or more gas control valves 46 configured to control a gas flow from a gas source 48. The control circuitry 32 controls the gas control valves 46. The welding power supply 12 may be coupled to one or multiple gas sources 48 because, for example, some welding processes may utilize different shielding gases than others. In some examples, the welding power supply 12 is configured to supply the gas with the welding power and/or the preheating power to the torch 14 via a combined torch cable 50. In other examples, the gas control valves 46 and gas source 48 may be separate from the welding power supply 12. For example, the gas control valves 46 may be disposed connected to the combined torch cable 50 via a connector.

The example power supply 12 includes a wire feed assembly 60 that supplies electrode wire 54 to the welding torch 14 for the welding operation. The wire feed assembly 60 includes elements such as a wire spool 64 and a wire feed drive configured to power drive rolls 68. The wire feed assembly 60 feeds the electrode wire 54 to the welding torch 14 along the torch cable 50. The welding output may be supplied through the torch cable 50 coupled to the welding torch 14 and/or the work cable 42 coupled to the workpiece 44. As disclosed in more detail below, the preheating output may be supplied to the welding torch 14 (or another via a connection in the wire feed assembly 60), supplied to the welding torch 14 via one or more preheating power terminals, and/or supplied to a preheater within the wire feed assembly 60 or otherwise within a housing 86 of the welding power supply 12.

The example power supply 12 is coupled to a preheating GMAW torch 14 configured to supply the gas, electrode wire 54, and electrical power to the welding application. As discussed in more detail below, the welding power supply 12 is configured to receive input power, convert a first portion of the input power to welding power and output the welding power to a weld circuit, and to convert a second portion of the input power to preheating power and output the preheating power to a preheating circuit or other preheater.

The example torch 14 includes a first contact tip 18 and a second contact tip 20. The electrode wire 54 is fed from the wire feed assembly 60 to the torch 14 and through the contact tips 18, 20, to produce a welding arc 26 between the electrode wire 54 and the workpiece 44. The preheating circuit includes the first contact tip 18, the second contact tip 20, and a portion 56 of the electrode wire 54 that is located between the first contact tip 18 and a second contact tip 20. The example power supply 12 is further coupled to the work cable 42 that is coupled to the workpiece 44.

In operation, the electrode wire 54 passes through the second contact tip 20 and the first contact tip 18, between which the power conversion circuitry 30 outputs a preheating current to heat the electrode wire 54. Specifically, in the configuration shown in Figure 1A, the preheating current enters the electrode wire 54 via the second contact tip 20 and exits via the first contact tip 18. However, the preheating current may be conducted in the opposite direction, using AC, and/or a combination of AC and DC. At the first contact tip 18, a welding current may also enter (or exit) the electrode wire 54.

The welding current is output by the power conversion circuitry 30, which derives the preheating power and the welding power from the primary power 22. The welding current flows between the electrode wire 54 and the workpiece 44, which in turn generates the welding arc 26. When the electrode wire 54 makes contact with the workpiece 44, or when an arc exists between the electrode wire 54 and the workpiece 44, an electrical circuit is completed and the welding current flows through the electrode wire 54, across the arc 26, across the metal work piece(s) 44, and returns to the power conversion circuitry 30 via a work cable 42. The welding current causes the electrode wire 54 and the parent metal of the work piece(s) 44 to melt, thereby joining the work pieces as the melt solidifies. By preheating the electrode wire 54, the welding arc 26 may be generated with drastically reduced arc energy. Generally speaking, the preheating current is proportional to the distance between the contact tips 18, 20 and the electrode wire 54 size.

During operation, the power conversion circuitry 30 establishes a preheating circuit to conduct preheating current through a section 56 of the electrode wire 54. The preheating current flows from the power conversion circuitry 30 to the second contact tip 20 via a first conductor 70, through the section 56 of the electrode wire 54 to the first contact tip 18, and returns to the power conversion circuitry 30 via a second conductor 72 connecting the power conversion circuitry 30 to the first contact tip 18. Either, both, or neither of the conductors 70, 72 may be combined with other cables and/or conduits. For example, the conductor 70 and/or the conductor 72 may be part of the cable 50. In other examples, the conductor 72 is included within the cable 50, and the conductor 70 is routed separately to the torch 14. To this end, the power supply 12 may include between one and three terminals to which one or more cables can be physically connected to establish the preheating, welding, and work connections. For example, multiple connections can be implemented into a single terminal using appropriate insulation between different connections.

In the illustrated example of Figure 1A, the power supply 12 includes two terminals 74, 76 configured to output the welding power to the contact tip 20 and the work cable 42. The conductor 72 couples the terminal 74 to the torch 14, which provides the power from the conductor 72 to the contact tip 18. The work cable 42 couples the terminal 76 to the workpiece 44. The example terminals 74, 76 may have designated polarities, or may have reversible polarities.

Because the preheating current path is superimposed with the welding current path over the connection between the first contact tip 18 and the power conversion circuitry 30 (e.g., via conductor 72), the cable 50 may enable a more cost-effective single connection between the first contact tip 18 and the power conversion circuitry 30 (e.g., a single cable) than providing separate connections for the welding current to the first contact tip 18 and for the preheating current to the first contact tip 18.

The example power supply 12 includes a housing 86, within which the control circuitry 32, the power conversion circuitry 30, the wire feed assembly 60, the user interface 34, and/or the gas control valving 46 are enclosed. In examples in which the power conversion circuitry 30 includes multiple power conversion circuits (e.g., a preheating power conversion circuit and a welding power conversion circuit), all of the power conversion circuits are included within the housing 86.

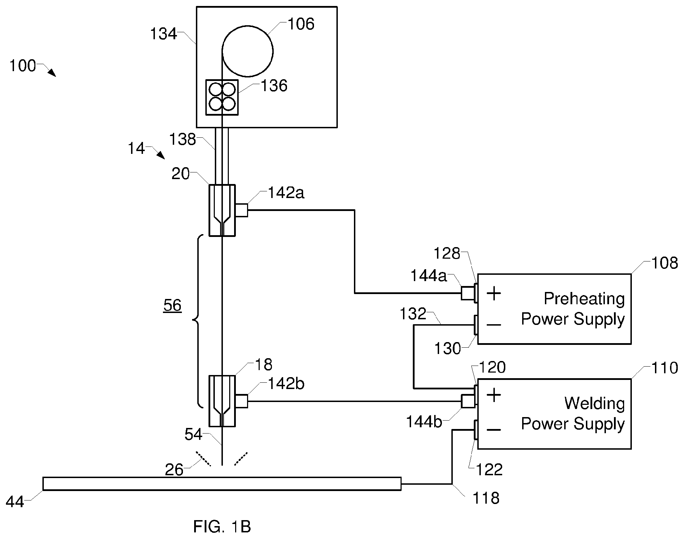

Figure 1B illustrates another example welding system 100 including a welding power supply 110 configured to convert input power to welding power and a preheating power supply 108 configured to convert input power to preheating power. The welding system 100 includes the example torch 14 having the contact tips 18, 20. The system 100 further includes the electrode wire 54 fed from a wire spool 106, a preheating power supply 108, and a welding power supply 110. The system 100 is illustrated in operation as producing the welding arc 26 between the electrode wire 54 and a workpiece 44.

In the example of Figure 1B, the system 100 includes separate power supplies 108, 110 to provide the welding power and the preheating power to the torch 14, instead of the single power supply 12 in the example of Figure 1A.

In operation, the electrode wire 54 passes from the wire spool 106 through the second contact tip 20 and the first contact tip 18, between which the preheating power supply 108 generates a preheating current to heat the electrode wire 54. Specifically, in the configuration shown in Figure 1B, the preheating current enters the electrode wire 54 via the second contact tip 20 and exits via the first contact tip 18. The example preheating power supply 108 may implement a controlled voltage control loop or a controlled current control loop to control the voltage and/or current output to the preheating circuit.

At the first contact tip 18, a welding current may also enter the electrode wire 114. The welding current is generated, or otherwise provided by, the welding power supply 110. The welding current flows between the electrode wire 54 and the workpiece 44, which in turn generates the welding arc 26. When the electrode wire 54 makes contact with a target metal workpiece 44, or when an arc exists between the electrode wire 54 and the workpiece 44, an electrical circuit is completed and the welding current flows through the electrode wire 54, across the arc 26, across the metal work piece(s) 44, and returns to the welding power supply 110. The welding current causes the electrode wire 54 and the parent metal of the work piece(s) 44 to melt, thereby joining the work pieces as the melt solidifies. By preheating the electrode wire 54, a welding arc 26 may be generated with drastically reduced arc energy. Generally speaking, the preheating current is proportional to the distance between the contact tips 18, 20 and the electrode wire 54 size.

The welding current is generated, or otherwise provided by, a welding power supply 110, while the preheating current is generated, or otherwise provided by, the preheating power supply 108. The preheating power supply 108 and the welding power supply 110 may ultimately share a common power source (e.g., a common generator or line current connection), but the current from the common power source is converted, inverted, and/or regulated to yield the two separate currents - the preheating current and the welding current. For instance, the preheat operation may be facilitated with a single power source and associated converter circuitry, in which case three leads may extend from a single power source.

During operation, the system 100 establishes a welding circuit to conduct welding current from the welding power supply 110 to the first contact tip 18, and returns to the power supply 110 via the welding arc 26, the workpiece 44, and a work lead 118. To enable connection between the welding power supply 110 and the first contact tip 18 and the workpiece 44, the welding power supply 110 includes terminals 120, 122 (e.g., a positive terminal and a negative terminal).

During operation, the preheating power supply establishes a preheating circuit to conduct preheating current through a section 56 of the electrode wire 54. To enable connection between the preheating power supply 108 and the contact tips 18, 20, the preheating power supply 108 includes terminals 128, 130. The preheating current flows from the preheating power supply 108 to the second contact tip 20, the section 56 of the electrode wire 54, the first contact tip 18, and returns to the preheating power supply 108 via a cable 132 connecting the terminal 120 of the welding power supply 110 to the terminal 130 of the preheating power supply 108.

Because the preheating current path is superimposed with the welding current path over the connection between the first contact tip 18 and the power supplies 108, 110, the cable 132 may enable a more cost-effective single connection between the first contact tip 18 and the power supplies 108, 110 (e.g., a single cable) than providing separate connections for the welding current to the first contact tip 18 and for the preheating current to the first contact tip 18. In other examples, the terminal 130 of the preheating power supply 108 is connected to the first contact tip 18 via a separate path than the path between the first contact tip 18 and the welding power supply 110.

As illustrated in Figure 1B, the example system 100 includes a wire feeder 134 that feeds the electrode wire 54 to the torch 14 using a wire drive 136. The electrode wire 54 exits the wire feeder 134 and travels through a wire liner 138.

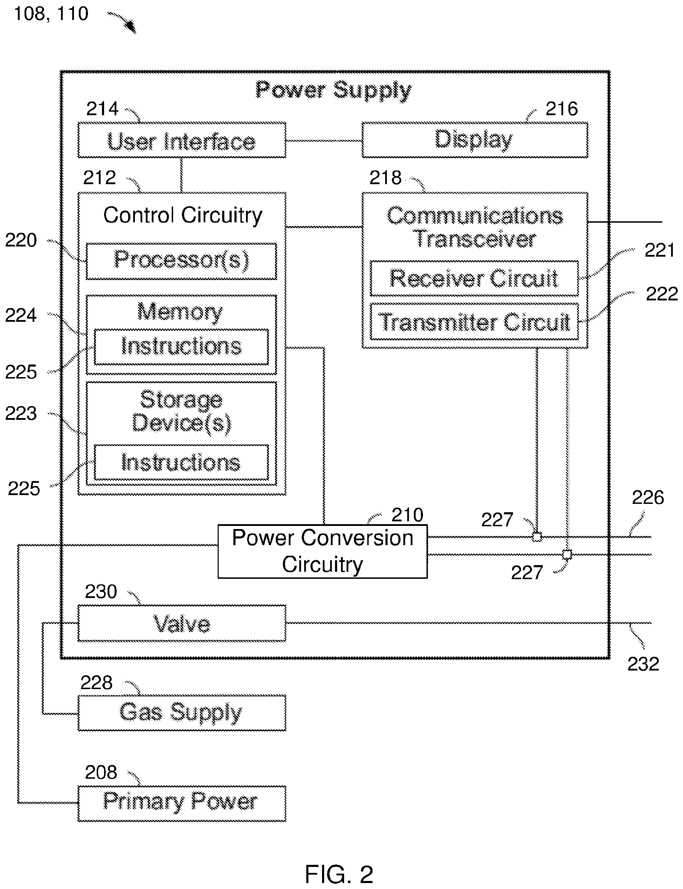

Figure 2 is a block diagram of an example implementation of the power supplies 108, 110 of Figure 1B. The example power supply 108, 110 powers, controls, and supplies consumables to a welding application. In some examples, the power supply 108, 110 directly supplies input power to the welding torch 14. In the illustrated example, the power supply 108, 110 is configured to supply power to welding operations and/or preheating operations. The example power supply 108, 110 also provides power to a wire feeder to supply the electrode wire 54 to the welding torch 14 for various welding applications (e.g., GMAW welding, flux core arc welding (FCAW), SAW).

The power supply 108, 110 receives primary power 208 (e.g., from the AC power grid, an engine/generator set, a battery, or other energy generating or storage devices, or a combination thereof), conditions the primary power, and provides an output power to one or more welding devices and/or preheating devices in accordance with demands of the system. The primary power 208 may be supplied from an offsite location (e.g., the primary power may originate from the power grid). The power supply 108, 110 includes a power conversion circuitry 210, which may include transformers, rectifiers, switches, and so forth, capable of converting the AC input power to AC and/or DC output power as dictated by the demands of the system (e.g., particular welding processes and regimes). The power conversion circuitry 210 converts input power (e.g., the primary power 208) to welding-type power based on a weld voltage setpoint and outputs the welding-type power via a weld circuit.

In some examples, the power conversion circuitry 210 is configured to convert the primary power 208 to both welding-type power and auxiliary power outputs. However, in other examples, the power conversion circuitry 210 is adapted to convert primary power only to a weld power output, and a separate auxiliary converter is provided to convert primary power to auxiliary power. In some other examples, the power supply 108, 110 receives a converted auxiliary power output directly from a wall outlet. Any suitable power conversion system or mechanism may be employed by the power supply 108, 110 to generate and supply both weld and auxiliary power.

The power supply 108, 110 includes a control circuitry 212 to control the operation of the power supply 108, 110. The power supply 108, 110 also includes a user interface 214. The control circuitry 212 receives input from the user interface 214, through which a user may choose a process and/or input desired parameters (e.g., voltages, currents, particular pulsed or non-pulsed welding regimes, and so forth). The user interface 214 may receive inputs using any input device, such as via a keypad, keyboard, buttons, touch screen, voice activation system, wireless device, etc. Furthermore, the control circuitry 212 controls operating parameters based on input by the user as well as based on other current operating parameters. Specifically, the user interface 214 may include a display 216 for presenting, showing, or indicating, information to an operator. The control circuitry 212 may also include interface circuitry for communicating data to other devices in the system, such as the wire feeder. For example, in some situations, the power supply 108, 110 wirelessly communicates with other welding devices within the welding system. Further, in some situations, the power supply 108, 110 communicates with other welding devices using a wired connection, such as by using a network interface controller (NIC) to communicate data via a network (e.g., ETHERNET, 10baseT, 10base100, etc.). In the example of Figure 2, the control circuitry 212 communicates with the wire feeder via the weld circuit via a communications transceiver 218.

The control circuitry 212 includes at least one controller or processor 220 that controls the operations of the welding power supply 108, 110. The control circuitry 212 receives and processes multiple inputs associated with the performance and demands of the system. The processor 220 may include one or more microprocessors, such as one or more "general-purpose" microprocessors, one or more special-purpose microprocessors and/or ASICS, and/or any other type of processing device. For example, the processor 220 may include one or more digital signal processors (DSPs).

The example control circuitry 212 includes one or more storage device(s) 223 and one or more memory device(s) 224. The storage device(s) 223 (e.g., nonvolatile storage) may include ROM, flash memory, a hard drive, and/or any other suitable optical, magnetic, and/or solid-state storage medium, and/or a combination thereof. The storage device 223 stores data (e.g., data corresponding to a welding application), instructions (e.g., software or firmware to perform welding processes), and/or any other appropriate data. Examples of stored data for a welding application include an attitude (e.g., orientation) of a welding torch, a distance between the contact tip and a workpiece, a voltage, a current, welding device settings, and so forth.

The memory device 224 may include a volatile memory, such as random access memory (RAM), and/or a nonvolatile memory, such as read-only memory (ROM). The memory device 224 and/or the storage device(s) 223 may store a variety of information and may be used for various purposes. For example, the memory device 224 and/or the storage device(s) 223 may store processor executable instructions 225 (e.g., firmware or software) for the processor 220 to execute. In addition, one or more control regimes for various welding processes, along with associated settings and parameters, may be stored in the storage device 223 and/or memory device 224, along with code configured to provide a specific output (e.g., initiate wire feed, enable gas flow, capture welding current data, detect short circuit parameters, determine amount of spatter) during operation.

In some examples, the welding power flows from the power conversion circuitry 210 through a weld cable 226. The example weld cable 226 is attachable and detachable from weld studs at each of the power supply 108, 110 (e.g.. to enable ease of replacement of the weld cable 226 in case of wear or damage). Furthermore, in some examples, welding data is provided with the weld cable 226 such that welding power and weld data are provided and transmitted together over the weld cable 226. The communications transceiver 218 is communicatively coupled to the weld cable 226 to communicate (e.g., send/receive) data over the weld cable 226. The communications transceiver 218 may be implemented based on various types of power line communications methods and techniques. For example, the communications transceiver 218 may utilize IEEE standard P1901.2 to provide data communications over the weld cable 226. In this manner, the weld cable 226 may be utilized to provide welding power from the power supply 108, 110 to the wire feeder 134 and the welding torch 14. Additionally or alternatively, the weld cable 226 may be used to transmit and/or receive data communications to/from the wire feeder 134 and the welding torch 14. The communications transceiver 218 is communicatively coupled to the weld cable 226, for example, via cable data couplers 227, to characterize the weld cable 226, as described in more detail below. The cable data coupler 227 may be, for example, a voltage or current sensor.

In some examples, the power supply 108, 110 includes or is implemented in a wire feeder.

The example communications transceiver 218 includes a receiver circuit 221 and a transmitter circuit 222. Generally, the receiver circuit 221 receives data transmitted by the wire feeder via the weld cable 226 and the transmitter circuit 222 transmits data to the wire feeder via the weld cable 226. As described in more detail below, the communications transceiver 218 enables remote configuration of the power supply 108, 110 from the location of the wire feeder and/or compensation of weld voltages by the power supply 108, 110 using weld voltage feedback information transmitted by the wire feeder 134. In some examples, the receiver circuit 221 receives communication(s) via the weld circuit while weld current is flowing through the weld circuit (e.g., during a welding-type operation) and/or after the weld current has stopped flowing through the weld circuit (e.g., after a welding-type operation). Examples of such communications include weld voltage feedback information measured at a device that is remote from the power supply 108, 110 (e.g., the wire feeder) while the weld current is flowing through the weld circuit

Example implementations of the communications transceiver 218 are described in U.S. Patent No. 9,012,807.. However, other implementations of the communications transceiver 218 may be used.

The example wire feeder 134 also includes a communications transceiver, which may be similar or identical in construction and/or function as the communications transceiver 218.

In some examples, a gas supply 228 provides shielding gases, such as argon, helium, carbon dioxide, and so forth, depending upon the welding application. The shielding gas flows to a valve 230, which controls the flow of gas, and if desired, may be selected to allow for modulating or regulating the amount of gas supplied to a welding application. The valve 230 may be opened, closed, or otherwise operated by the control circuitry 212 to enable, inhibit, or control gas flow (e.g., shielding gas) through the valve 230. Shielding gas exits the valve 230 and flows through a cable 232 (which in some implementations may be packaged with the welding power output) to the wire feeder which provides the shielding gas to the welding application. In some examples, the power supply 108, 110 does not include the gas supply 228, the valve 230, and/or the cable 232.

In either of the example systems of Figures 1A and/or 1B, the preheating power supply (e.g., the power conversion circuitry 30, the preheating power supply 108), the welding power supply (e.g., the power conversion circuitry 30, the welding power supply 110), and/or any other device in communication with the systems may be configured to calculate instantaneous power of a process that contains multiple sources of input energy and display the calculated power via a user interface. Each of the energy sources into the process (e.g., the power conversion circuitry 30, the power supplies 108, 110) monitors an average instantaneous power by collecting samples of output voltage and output current.

To calculate the average instantaneous power, the example systems of Figures 1A and/or 1B collect process feedback data from all energy input systems (e.g., the power conversion circuitry 30, the power supplies 108, 110) at a processor in communication with the energy input systems (e.g., the processor(s) 36, 220). For example, during the welding process and/or at the conclusion of the welding process, the individual energy sources provide the average instantaneous power to the processor that is to perform the calculation. In some examples, such as the system 100 illustrated in Figure 1B, the system 100 includes voltage sensors 142a, 142b and current sensors 144a, 144b. The voltage sensors 142a, 142b and current sensors 144a, 144b are configured to measure the voltages and currents associated with each of the power sources (e.g., heat sources) which provide heat input to the weld. In the example of Figure 1B, the power supplies 108, 110 provide multiple power sources or heat sources, but the same power supply 12 may provide multiple heat sources as illustrated in Figure 1A.

In the example of Figure 1B, the voltage sensors 142a, 142b are attached to or integrated into the torch 14 to reduce the effects of voltage drop over the power cables connecting the torch 14 to the power supplies 108, 110. In some other examples, either or both of the voltage sensors 142a, 142b may be attached to or integrated into the power supplies 108, 110. The example current sensors 144a, 144b may be attached to or integrated into the torch 14, the power supplies 108, 110, the cables, and/or at any other point in the welding and/or preheating circuits.

The processor 36, 220 calculates a total process energy by summing the process energies from the multiple energy sources. For example, the processor 36, 220 may calculate a total average instantaneous power using the equation:

Total Average Instantaneous Power (e.g., J/s or Watts) = (Average Instantaneous Power from Energy Source 1) + (Average Instantaneous Power from Energy Source 2) + . . . (Average Instantaneous Power from Energy Source n)

The total average instantaneous power may be output, or multiplied by the duration of the welding process (e.g., in seconds) to calculate the total process energy for the welding process. The processor 36, 220 outputs the result (e.g., a total average instantaneous power) (e.g., by displaying the result via the user interface 34 and/or the display 216) and/or by communicating the result to an external system (e.g., a welding data collection system, a remote user interface such as a smartphone or computing system, etc.).

In some examples, the processor 36, 220 may control the welding process based on the total average instantaneous power and/or the average instantaneous power for individual energy sources. For example, as the processor 36, 220 collects the instantaneous power from the multiple energy sources, the processor 36, 220 may compare the total average instantaneous power at that point in the welding process to a benchmark, target, or threshold average instantaneous power, and adjust the output(s) of one or more of the multiple energy sources based on the comparison.

While the example methods and apparatus disclosed above provide an energy source for wire preheating and an energy source for a welding arc, other example methods and apparatus may include additional and/or different sources of process energy, such as one or more lasers, additional preheated wire with corresponding preheat energy (e.g., resistively heated, inductively heated, etc.), additional arcs with corresponding arc energy, and/or any other sources of energy.

Furthermore, while the example methods and apparatus disclosed above use the processors 36, 220 of the power supplies, in some other examples, one or more external devices, such as a robot controller, a programmable logic controller (PLC), a computing system, a cloud computing system, and/or any other processing device external to the welding system, may collect the power or energy data and determine the total power or energy input to the process.

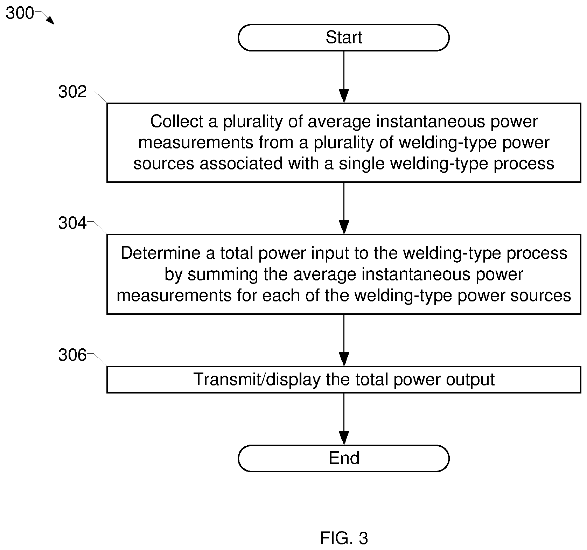

Figure 3 is a flowchart representative of example machine readable instructions 300 which may be executed by the power supply (e.g., by the processor 36, 220) to determine a total power input to a weld by multiple power supplies and/or sources of heat input. While the example instructions 300 are described with reference to the power supply 12 of Figure 1A, the instructions may be performed by any power supply and/or welding equipment associated with the system, and/or by an external computing device in communication with the power supplies.

At block 302, the processor 36 collects a plurality of average instantaneous power measurements from a plurality of welding-type power sources associated with a single welding-type process. The processor 36 receives instantaneous voltage and instantaneous current measurements from respective voltage and current sensors measuring the corresponding power sources. The processor 36 then calculates the average instantaneous power measurements based on the received instantaneous voltage and instantaneous current measurements.

At block 304, the processor 36 determines a total power input to the welding-type process by summing the average instantaneous power measurements for each of the welding-type power sources. For example, the processor 36 may calculate a total average instantaneous power using the equation:

Total Average Instantaneous Power (e.g., J/s or Watts) = (Average Instantaneous Power from Energy Source 1) + (Average Instantaneous Power from Energy Source 2) + . . . (Average Instantaneous Power from Energy Source n)

At block 306, the processor 36 transmits and/or displays the total power output. For example, the processor 36 may transmit the total power output to an external device for storage and/or display, and/or display the total power output on a local display device. Additionally or alternatively, the processor 36 may store the total power output for subsequent use. The total power output may be used by a weld operator, weld engineer, manager, and/or any other personnel to determine compliance with a welding specification (e.g., a weld procedure specification), and/or as part of documentation for the weldment and/or the associated part. The example instructions may then end.

The present devices and/or methods may be realized in hardware, software, or a combination of hardware and software. The present methods and/or systems may be realized in a centralized fashion in at least one computing system, processors, and/or other logic circuits, or in a distributed fashion where different elements are spread across several interconnected computing systems, processors, and/or other logic circuits. Any kind of computing system or other apparatus adapted for carrying out the methods described herein is suited. A typical combination of hardware and software may be a processing system integrated into a welding power supply with a program or other code that, when being loaded and executed, controls the welding power supply such that it carries out the methods described herein. Another typical implementation may comprise an application specific integrated circuit or chip such as field programmable gate arrays (FPGAs), a programmable logic device (PLD) or complex programmable logic device (CPLD), and/or a system-on-a-chip (SoC). Some implementations may comprise a non-transitory machine-readable (e.g., computer readable) medium (e.g., FLASH memory, optical disk, magnetic storage disk, or the like) having stored thereon one or more lines of code executable by a machine, thereby causing the machine to perform processes as described herein. As used herein, the term "non-transitory machine readable medium" is defined to include all types of machine readable storage media and to exclude propagating signals.

An example control circuit implementation may be a microcontroller, a field programmable logic circuit and/or any other control or logic circuit capable of executing instructions that executes weld control software. The control circuit could also be implemented in analog circuits and/or a combination of digital and analog circuitry.

While the present method and/or system has been described with reference to certain implementations, it will be understood by those skilled in the art that various changes may be made and equivalents may be substituted without departing from the scope of the present invention as defined in the appended claims.

**Claims**

**1.** A welding-type system (10, 100), comprising:

a plurality of welding-type power sources (30, 108, 110) associated with a single welding-type process;
voltage and current sensors for measuring the corresponding power source;
the welding-type system (10, 100) being **characterised by**:
a processor (36; 220); and
memory (38; 223, 224) comprising machine readable instructions (225; 300) which, when executed, cause the processor to:

collect a plurality of average instantaneous power measurements from the plurality of welding-type power sources (30; 108, 110) associated with a single welding-type process by receiving instantaneous voltage and instantaneous current measurements from the respective voltage and current sensors measuring the corresponding power sources and calculating the average instantaneous power measurements based on the received instantaneous voltage and instantaneous current measurements; and
determine a total power input to the welding-type process by summing the average instantaneous power measurements for each of the welding-type power sources.

2. The welding-type system (10) as defined in claim 1, wherein one of the welding-type power source (108, 110) comprises a power conversion circuitry (210), and wherein the power conversion circuitry (30; 210) is configured to output welding-type power, and wherein the processor (36) is further configured to collect at least one of the average instantaneous power measurements from the welding-type power.

3. The welding-type system (10) as defined in claim 1, wherein one of the welding-type power source (108, 110) comprises a power conversion circuitry (210), and wherein the power conversion circuitry (210) is configured to output preheating power to an electrode preheating circuit, and wherein the processor (36) is configured to collect at least one of the average instantaneous power measurements from the preheating power.

4. The welding-type system (10; 100) as defined in claim 1, wherein the voltage and current sensors comprise:

a first voltage sensor (142a) configured to measure a first voltage output by a first one (108) of the plurality of welding-type power sources (108, 110); and
a first current sensor (144a) configured to measure a first current output by the first one of the plurality of welding-type power sources, wherein the instructions (225; 300) are configured to cause the processor (220) to determine a first portion of the plurality of average instantaneous power measurements from the first voltage output and the first current output.

5. The welding-type system (100) as defined in claim 4, further comprising a welding torch (14), wherein the first voltage sensor (142a) is physically attached to or integrated in at least one of the welding torch or the first one (108) of the plurality of welding-type power sources (108, 110).

6. The welding-type system (100) as defined in claim 4, wherein the voltage and current sensors further comprise:

a second voltage sensor (142b) configured to measure a second voltage output by a second one (110) of the plurality of welding-type power sources (108, 110); and
a second current sensor (144b) configured to measure a second current output by the second one of the plurality of welding-type power sources,
wherein the instructions are configured to cause the processor (220) to determine a second portion of the plurality of average instantaneous power measurements from the second voltage output and the second current output.

7. The welding-type system (100) as defined in claim 6, further comprising a welding torch (14), wherein the second voltage sensor (142b) is physically attached to or integrated in at least one of a welding torch or the second one (110) of the plurality of welding-type power sources (108, 110).

8. The welding-type system (10; 100) as defined in claim 1, wherein the instructions (225; 30) are configured to cause the processor (36; 220) to determine the total power input as a total average instantaneous power or further comprising a display (34; 216) wherein the instructions (225; 300) are configured to cause the processor (36; 220) to display the determined total power via the display or further comprising communications circuitry wherein the instructions (225; 300) are configured to cause the processor (36; 220) to transmit the determined total power via the communications circuitry.

9. A method to determine a total heat input to a welding-type operation, the method being **characterised by**:

collecting, via a processor (36; 220), a plurality of average instantaneous power measurements from a plurality of welding-type power sources (30; 108, 110) associated with a single welding-type process by receiving instantaneous voltage and instantaneous current measurements from respective voltage and current sensors measuring the corresponding power sources and calculating the average instantaneous power measurements based on the received instantaneous voltage and instantaneous current measurements; and

determining, via the processor, a total power input to the welding-type process by summing the average instantaneous power measurements for each of the welding-type power sources.

10. The method as defined in claim 9, further comprising outputting welding-type power via power conversion circuitry (30), the collecting of the plurality of average instantaneous power measurements comprising collecting the at least a portion of the plurality of average instantaneous power measurements from the welding-type power.

11. The method as defined in claim 9, further comprising outputting preheating power via power conversion circuitry (30), the collecting of the plurality of average instantaneous power measurements comprising collecting the at least a portion of the plurality of average instantaneous power measurements from the preheating power.

12. The method as defined in claim 9, further comprising:

measuring, via a first voltage sensor (142a), a first voltage output by a first one (108) of the plurality of welding-type power sources (108, 110)); and

measuring, via a first current sensor (144a), a first current output by the first one of the plurality of welding-type power sources, the collecting of the plurality of average instantaneous power measurements comprising determining a first portion of the plurality of average instantaneous power measurements from the first voltage output and the first current output.

13. The method as defined in claim 12, wherein the first voltage sensor (142a) is physically attached to or integrated in at least one of a welding torch (!4) or the first one (108) of the plurality of welding-type power sources (108, 110).

14. The method as defined in claim 12, further comprising:

measuring, via a second voltage sensor (142b), a second voltage output by a second one (110) of the plurality of welding-type power sources (108, 110); and

measuring, via a second current sensor (144b), a second current output by the second one (110) of the plurality of welding-type power sources, the collecting of the plurality of average instantaneous power measurements comprising determining a second portion of the plurality of average instantaneous power measurements from the second voltage output and the second current output, and optionally wherein the second voltage sensor is physically attached to or integrated in at least one of a welding torch or the second one of the plurality of welding-type power sources.

15. The method as defined in claim 9, wherein determining the total power input comprises determining a total average instantaneous power or further comprising displaying the determined total power via a display (34; 216) or further comprising transmitting the determined total power via communications circuitry.

**Patentansprüche**

1. Schweißsystem (10, 100), aufweisend:

eine Mehrzahl von Schweißleistungsquellen (30, 108, 110), die mit einem einzelnen Schweißvorgang verbunden sind;

Spannungs- und Stromsensoren für ein Messen der entsprechenden Leistungsquelle;

das Schweißsystem (10, 100) **gekennzeichnet durch**:

einen Prozessor (36; 220); und

Speicher (38; 223, 224), aufweisend maschinenlesbare Anweisungen (225; 300), die, bei Ausführung, den Prozessor veranlassen zu einem:

Erfassen einer Mehrzahl von mittleren Momentanleistungsmessungen von der Mehrzahl von Schweißleistungsquellen (30; 108, 110), die mit einem einzelnen Schweißvorgang verbunden sind, durch Empfangen von Momentanspannungs- und Momentanstrommessungen von den jeweiligen Spannungs- und Stromsensoren, die die entsprechenden Leistungsquellen messen, und Berechnen der mittleren Momentanleistungsmessungen basierend auf den empfangenen Momentanspannungs- und Momentanstrommessungen; und
Bestimmen einer Gesamtleistungsaufnahme für den Schweißvorgang durch Summieren der mittleren Momentanleistungsmessungen für jede der Schweißleistungsquellen.

2. Schweißsystem (10) nach Anspruch 1, wobei eine der Schweißleistungsquellen (108, 110) eine Leistungsumwandlungsschaltung (210) aufweist, und wobei die Leistungsumwandlungsschaltung (30; 210) ausgelegt ist, Schweißleistung auszugeben, und wobei der Prozessor (36) ferner ausgelegt ist, mindestens eine der mittleren Momentanleistungsmessungen der Schweißleistung zu erfassen.

3. Schweißsystem (10) nach Anspruch 1, wobei eine der Schweißleistungsquellen (108, 110) eine Leistungsumwandlungsschaltung (210) aufweist, und wobei die Leistungsumwandlungsschaltung (210) ausgelegt ist, eine Vorheizleistung an eine Elektrodenvorheizschaltung auszugeben, und wobei der Prozessor (36) ausgelegt ist, mindestens eine der mittleren Momentanleistungsmessungen aus der Vorheizleistung zu erfassen.

4. Schweißsystem (10; 100) nach Anspruch 1, wobei die Spannungs- und Stromsensoren aufweisen:

einen ersten Spannungssensor (142a), der ausgelegt ist, eine erste Spannung zu messen, die von einer ersten (108) der Mehrzahl von Schweißleistungsquellen (108, 110) ausgegeben wird; und
einen ersten Stromsensor (144a), der ausgelegt ist, um einen ersten Strom zu messen, der von der ersten der Mehrzahl von Schweißleistungsquellen ausgegeben wird, wobei die Anweisungen (225; 300) ausgelegt sind, um den Prozessor (220) zu veranlassen, einen ersten Teil der Mehrzahl von mittleren Momentanleistungsmessungen aus der ersten Spannungsausgabe und der ersten Stromausgabe zu bestimmen.

5. Schweißsystem (100) nach Anspruch 4, ferner aufweisend einen Schweißbrenner (14), wobei der erste Spannungssensor (142a) physisch an dem Schweißbrenner oder an der ersten (108) der Mehrzahl von Schweißleistungsquellen (108, 110) angebracht oder darin integriert ist.

6. Schweißsystem (100) nach Anspruch 4, wobei die Spannungs- und Stromsensoren ferner aufweisen:

einen zweiten Spannungssensor (142b), der ausgelegt ist, eine zweite Spannung zu messen die von der zweiten (110) der Mehrzahl von Schweißleistungsquellen (108, 110) ausgegeben wird; und
einen zweiten Stromsensor (144b), der ausgelegt ist, einen zweiten Strom zu messen, der von der zweiten der Mehrzahl von Schweißleistungsquellen ausgegeben wird,
wobei die Anweisungen ausgelegt sind, den Prozessor (220) zu veranlassen, einen zweiten Teil der Mehrzahl von mittleren Momentanleistungsmessungen aus der zweiten Spannungsausgabe und der zweiten Stromausgabe zu bestimmen.

7. Schweißsystem (100) nach Anspruch 6, ferner aufweisend einen Schweißbrenner (14), wobei der zweite Spannungssensor (142b) physisch an mindestens einem von einem Schweißbrenner oder der zweiten (110) der Mehrzahl von Schweißleistungsquellen (108, 110) angebracht oder darin integriert ist.

8. Schweißsystem (10; 100) nach Anspruch 1, wobei die Anweisungen (225; 30) ausgelegt sind, den Prozessor (36; 220) zu veranlassen, die Gesamtleistungsaufnahme als mittlere Momentangesamtleistung zu bestimmen, oder ferner aufweisend eine Anzeige (34; 216), wobei die Anweisungen (225; 300) ausgelegt sind, den Prozessor (36; 220) zu veranlassen, die bestimmte Gesamtleistung über die Anzeige anzuzeigen, oder ferner aufweisend eine Kommunikationsschaltung, wobei die Anweisungen (225; 300) ausgelegt sind, den Prozessor (36; 220) zu veranlassen, die bestimmte Gesamtleistung über die Kommunikationsschaltung zu übertragen.

9. Verfahren für ein Bestimmen einer Gesamtwärmezuführung zu einem Schweißvorgang, das Verfahren **gekennzeichnet durch**:

Erfassen, über einen Prozessor (36; 220), einer Mehrzahl von mittleren Momentanleistungsmessungen von einer Mehrzahl von Schweißleistungsquellen (30; 108, 110), die mit einem einzelnen Schweißvorgang verbunden sind, durch Empfangen von Momentanspannungs- und Momentanstrommessungen von jeweiligen Spannungs- und Stromsensoren, die die entsprechenden Leistungsquellen messen, und Berechnen der mittleren Momentanleistungsmessungen basierend auf den empfangenen Momentanspannungs- und Momentanstrommessungen; und

Bestimmen, durch den Prozessor, einer Gesamtleistungsaufnahme für den Schweißvorgang durch Summieren der mittleren Momentanleistungsmessungen für jede der Schweißleistungsquellen.

10. Verfahren nach Anspruch 9, ferner aufweisend Ausgeben von Schweißleistung über eine Leistungsumwandlungsschaltung (30), wobei das Erfassen der Mehrzahl von mittleren Momentanleistungsmessungen das Erfassen des mindestens einen Teils der Mehrzahl von mittleren Momentanleistungsmessungen aus der Schweißleistung aufweist.

11. Verfahren nach Anspruch 9, ferner aufweisend Ausgeben von Vorheizleistung über eine Leistungsumwandlungsschaltung (30), wobei das Erfassen der Mehrzahl von mittleren Momentanleistungsmessungen das Erfassen des mindestens einen Teils der Mehrzahl von mittleren Momentanleistungsmessungen aus der Vorheizleistung aufweist.

12. Verfahren nach Anspruch 9, ferner aufweisend:

Messen, über einen ersten Spannungssensor (142a), einer ersten Spannung, die von einer ersten (108) der Mehrzahl von Schweißleistungsquellen (108, 110) ausgegeben wird; und

Messen, über einen ersten Stromsensor (144a), eines ersten Stroms, der von der ersten der Mehrzahl von Schweißleistungsquellen ausgegeben wird, wobei das Erfassen der Mehrzahl von mittleren Momentanleistungsmessungen das Bestimmen eines ersten Teils der Mehrzahl von mittleren Momentanleistungsmessungen aus der ersten Spannungsausgabe und der ersten Stromausgabe aufweist.

13. Verfahren nach Anspruch 12, wobei der erste Spannungssensor (142a) physisch an mindestens einem von einem Schweißbrenner (14) oder der ersten (108) der Mehrzahl von Schweißleistungsquellen (108, 110) angebracht oder in diese integriert ist.

14. Verfahren nach Anspruch 12, ferner aufweisend:

Messen, über einen zweiten Spannungssensor (142b), einer zweiten Spannung, die von einer zweiten (110) der Mehrzahl von Schweißleistungsquellen (108, 110) ausgegeben wird; und

Messen, über einen zweiten Stromsensor (144b), eines zweiten Stroms, der von der zweiten (110) der Mehrzahl von Schweißleistungsquellen ausgegeben wird, wobei das Erfassen der Mehrzahl von mittleren Momentanleistungsmessungen das Bestimmen eines zweiten Teils der Mehrzahl von mittleren Momentanleistungsmessungen aus der zweiten Spannungsausgabe und der zweiten Stromausgabe aufweist, und wobei optional der zweite Spannungssensor physisch an mindestens einem von einem Schweißbrenner oder der zweiten der Mehrzahl von Schweißleistungsquellen angebracht oder darin integriert ist.

15. Verfahren nach Anspruch 9, wobei das Bestimmen der Gesamtleistungsaufnahme das Bestimmen einer mittleren Gesamtmomentanleistung aufweist oder ferner ein Anzeigen der bestimmten Gesamtleistung über eine Anzeige (34; 216) aufweist oder ferner ein Übertragen der bestimmten Gesamtleistung über eine Kommunikationsschaltung aufweist.

## Revendications

1. Système de type soudage (10, 100) comprenant :

une pluralité de sources d'énergie de type soudage (30, 108, 110) associées à un processus de type soudage unique ;
des capteurs de tension et de courant pour mesurer la source d'énergie correspondante ;

le système de type soudage (10, 100) étant **caractérisé par** :

un processeur (36, 220) ; et

une mémoire (38 ; 223, 224) comprenant des instructions lisibles par machine (225 ; 300) qui, lorsqu'elles sont exécutées, amènent le processeur à :

collecter une pluralité de mesures d'énergie instantanée moyenne à partir de la pluralité de sources d'énergie de type soudage (30, 108, 110) associées à un processus de type soudage unique en recevant des mesures de tension instantanée et de courant instantané à partir des capteurs de tension et de courant respectifs mesurant les sources d'énergie correspondantes et calculer les mesures d'énergie instantanée moyenne sur la base de la tension instantanée reçue et des mesures de courant instantané reçues ; et

déterminer une entrée d'énergie totale dans le processus de type soudage en additionnant les mesures d'énergie instantanée moyenne pour chacune des sources d'énergie de type soudage.

2. Système de type soudage (10) selon la revendication 1, dans lequel l'une des sources d'énergie de type soudage (108, 110) comprend un circuit de conversion d'énergie (210), et dans lequel le circuit de conversion d'énergie (30 ; 210) est configuré pour sortir de l'énergie de type soudage, et dans lequel le processeur (36) est en outre configuré pour collecter au moins une des mesures d'énergie instantanée moyenne à partir de l'énergie de type soudage.

3. Système de type soudage (10) selon la revendication 1, dans lequel l'une des sources d'énergie de type soudage (108, 110) comprend un circuit de conversion d'énergie (210), et dans lequel le circuit de conversion d'énergie (210) est configuré pour délivrer une énergie de préchauffage à un circuit de préchauffage d'électrode, et dans lequel le processeur (36) est configuré pour collecter au moins une des mesures d'énergie instantanée moyenne à partir de l'énergie de préchauffage.

4. Système de type soudage (10 ; 100) selon la revendication 1, dans lequel les capteurs de tension et de courant comprennent :

un premier capteur de tension (142a) configuré pour mesurer une première tension sortie par une première (108) de la pluralité de sources d'énergie de type soudage (108, 110) ; et

un premier capteur de courant (144a) configuré pour mesurer une première sortie de courant par la première de la pluralité de sources d'énergie de type soudage, dans lequel les instructions (225 ; 300) sont configurées pour amener le processeur (220) à déterminer une première partie de la pluralité de mesures d'énergie instantanée moyenne à partir de la première sortie de tension et de la première sortie de courant.

5. Système de soudage (100) selon la revendication 4, comprenant en outre un chalumeau de soudage (14), dans lequel le premier capteur de tension (142a) est physiquement fixé à ou intégré dans l'au moins un du chalumeau de soudage ou de la première (108) de la pluralité de sources d'énergie de type soudage (108, 110).

6. Système de soudage (100) selon la revendication 4, dans lequel les capteurs de tension et de courant comprennent en outre :

un deuxième capteur de tension (142b) configuré pour mesurer une deuxième tension de sortie par une deuxième (110) de la pluralité de sources d'énergie de type soudage (108, 110) ; et

un deuxième capteur de courant (144b) configuré pour mesurer une deuxième sortie de courant par la deuxième de la pluralité de sources d'énergie de type soudage,

dans lequel les instructions sont configurées pour amener le processeur (220) à déterminer une deuxième partie de la pluralité de mesures d'énergie instantanée moyenne à partir de la deuxième sortie de tension et de la deuxième sortie de courant.

7. Système de type soudage (100) selon la revendication 6, comprenant en outre un chalumeau de soudage (14), dans lequel le deuxième capteur de tension (142b) est physiquement fixé à ou intégré dans l'au moins un d'un chalumeau de soudage ou de la deuxième (110) de la pluralité de sources d'énergie de type soudage (108, 110).

8. Le système de type soudage (10 ; 100) selon la revendication 1, dans lequel les instructions (225 ; 30) sont configurées pour amener le processeur (36 ; 220) pour déterminer l'entrée d'énergie totale comme une énergie instantanée moyenne totale ou comprenant en outre un affichage (34 ; 216) dans lequel les instructions (225 ; 300) sont configurées pour amener le processeur (36 ; 220) pour afficher l'énergie totale déterminée par l'intermédiaire de l'affichage ou comprenant en outre un circuit de communication dans lequel les instructions (225 ; 300) sont configurées pour amener le processeur (36 ; 220) pour transmettre l'énergie totale déterminée par l'intermédiaire du circuit de communication.

9. Procédé pour déterminer une entrée de chaleur totale pour une opération de type soudage, le procédé étant **caractérisé par** :

la collecte, via un processeur (36 ; 220), d'une pluralité de mesures d'énergie instantanée moyenne à partir d'une pluralité de sources d'énergie de type soudage (30 ; 108, 110) associée à un processus unique de type soudage en recevant des mesures instantanées de tension et de courant à partir de capteurs de tension et de courant respectifs mesurant les sources d'énergie correspondantes et en calculant les mesures instantanées moyennes d'énergie sur la base des mesures instantanées de tension et de courant reçues ; et

la détermination, par l'intermédiaire du processeur, d'une entrée d'énergie totale au processus de type soudage en additionnant les mesures d'énergie instantanée moyenne pour chacune des sources d'énergie de type soudage.

10. Procédé selon la revendication 9, comprenant en outre la sortie d'une énergie de type soudage par l'intermédiaire d'un circuit de conversion d'énergie (30), la collecte de la pluralité de mesures d'énergie instantanée moyenne comprenant la collecte de l'au moins une partie de la pluralité de mesures d'énergie instantanée moyenne à partir de l'énergie de type soudage.

11. Procédé selon la revendication 9, comprenant en outre la sortie d'une énergie de préchauffage par l'intermédiaire d'un circuit de conversion d'énergie (30), la collecte de la pluralité de mesures d'énergie instantanée moyenne comprenant la collecte de l'au moins une partie de la pluralité de mesures d'énergie instantanée moyenne à partir de l'énergie de préchauffage.

12. Procédé selon la revendication 9, comprenant en outre :

la mesure, via un premier capteur de tension (142a), d'une première tension sortie par une première (108) de la pluralité de sources d'énergie de type soudage (108, 110)) ; et

la mesure, par l'intermédiaire d'un premier capteur de courant (144a), d'une première sortie de courant par la première source de la pluralité de sources d'énergie de type soudage, la collecte de la pluralité de mesures d'énergie instantanée moyenne comprenant la détermination d'une première partie de la pluralité de mesures d'énergie instantanée moyenne à partir de la première sortie de tension et de la première sortie de courant.

13. Procédé selon la revendication 12, dans lequel le premier capteur de tension (142a) est physiquement fixé à ou intégré dans l'au moins une d'une torche de soudage (14) ou de la première (108) de la pluralité de sources d'énergie de type soudage (108, 110).

14. Procédé selon la revendication 12, comprenant en outre :

la mesure, via un deuxième capteur de tension (142b), d'une deuxième tension sortie par une deuxième (110) de la pluralité de sources d'énergie de type soudage (108, 110) ; et

la mesure, via un deuxième capteur de courant (144b), d'une deuxième sortie de courant par la deuxième (110) de la pluralité de sources d'énergie de type soudage, la collecte de la pluralité de mesures d'énergie instantanée moyenne comprenant la détermination d'une deuxième partie de la pluralité de mesures d'énergie instantanée moyenne à partir de la deuxième sortie de tension et de la deuxième sortie de courant, et facultativement dans lequel le deuxième capteur de tension est physiquement fixé à ou intégré dans l'au moins un d'un chalumeau de soudage ou de la deuxième source d'énergie de la pluralité de sources d'énergie de type soudage.

15. Procédé selon la revendication 9, dans lequel la détermination de l'entrée d'énergie totale comprend la détermination d'une énergie instantanée : moyenne totale ou comprenant en outre l'affichage de l'énergie totale déterminée via un affichage (34 ; 216) ou comprenant en outre la transmission de l'énergie totale déterminée via un circuit de communication.

FIG. 1A

FIG. 1B

108, 110

**Power Supply**

214 — User Interface ——— Display — 216

212 — Control Circuitry

Communications Transceiver — 218

220 — Processor(s)

Receiver Circuit — 221

Transmitter Circuit — 222

224 — Memory

225 — Instructions

223 — Storage Device(s)

225 — Instructions

210 — Power Conversion Circuitry

227

227

226

230 — Valve

232

228 — Gas Supply

208 — Primary Power

FIG. 2

300

Start

302

Collect a plurality of average instantaneous power measurements from a plurality of welding-type power sources associated with a single welding-type process

304

Determine a total power input to the welding-type process by summing the average instantaneous power measurements for each of the welding-type power sources

306

Transmit/display the total power output

End

FIG. 3

**REFERENCES CITED IN THE DESCRIPTION**

**Patent documents cited in the description**

- US 2013119036 A1
- US 2018333798 A1
- US 2019193191 A1
- US 9012807 B